# EUROPEAN PATENT APPLICATION

(11) **EP 4 525 543 A1**
(43) Date of publication of application: **19.03.2025**
(21) Application number: 23803039.9
(22) Date of filing: 12.05.2023
(51) Int. Cl.: H04W 74/08

(54) **MESSAGE TRANSMISSION METHOD AND COMMUNICATION APPARATUS**

(30) Priority: 12.05.2022 CN 202210513339
(71) Applicant: Spreadtrum Semiconductor (Nanjing) Co., Ltd., Nanjing, Jiangsu 211899 (CN)
(72) Inventor: LEI, Zhenzhu, Nanjing, Jiangsu 211899 (CN)
(74) Representative: Mewburn Ellis LLP
(86) International application number: PCT/CN2023/093895
(87) International publication number: WO 2023/217271

(57) **Abstract**

Embodiments of the disclosure provide a message transmission method and a communication apparatus. The message transmission method includes the following. A transmission mode for Msg1 is determined, where the transmission mode for the Msg1 is repetition or non-repetition, and the Msg1 is used to request random access. The Msg1 is sent to a network device, where the Msg1 includes a preamble, and the preamble indicates the transmission mode for the Msg1. By using the method provided in the disclosure, a coexistence between a terminal device that needs Msg1 repetition and a terminal device that does not need Msg1 repetition may be realized.

## Description

### TECHNICAL FIELD

The present disclosure relates to the field of communication technology, and in particular, to a message transmission method and a communication apparatus.

### BACKGROUND

As the 5G technology further evolves, in various communication scenarios (for example, satellite communication), there are increasing needs for uplink coverage enhancement, especially for uplink coverage enhancement regarding a random access procedure, for example, the uplink coverage enhancement of a physical random access channel (PRACH). Generally, the most direct method to enhance the uplink coverage of the PRACH is repetition transmission (repetition for short) of Msg1 in the random access procedure. However, in actual communication systems, there are usually two types of user equipment (UE). One type of UE has insufficient uplink coverage, such as a UE at an edge of a cell, and this type of UE needs Msg1 repetition. The other type of UE has better uplink coverage, such as a UE at a central region of a cell, and this type of UE does not need Msg1 repetition. How to realize a coexistence between the UE that needs Msg1 repetition and the UE that does not need Msg1 repetition is a problem to be solved.

### SUMMARY

Embodiments of the disclosure provide a message transmission method and a communication apparatus. In the disclosure, a transmission mode for Msg1 is indicated by a preamble in the Msg1, thereby realizing a coexistence between a terminal device that needs Msg1 repetition and a terminal device that does not need Msg1 repetition.

In a first aspect, embodiments of the disclosure provide a message transmission method applied to a terminal device. The method includes the following. A transmission mode for Msg1 is determined, where the transmission mode for the Msg1 is repetition or non-repetition, and the Msg1 is used to request random access. The Msg1 is sent to a network device, where the Msg1 includes a preamble, and the preamble indicates the transmission mode for the Msg1.

Based on the description of the first aspect, the terminal device determines the transmission mode for the Msg1, and the transmission mode may be repetition or non-repetition. The terminal device sends the Msg1 to the network device, and the preamble in the Msg1 indicates the transmission mode for the Msg1. In this way, the preamble in the Msg1 indicates the terminal device whether to perform Msg1 repetition, thereby realizing the coexistence between the terminal device that needs Msg1 repetition and the terminal device that does not need Msg1 repetition.

In an optional embodiment, the preamble indicates the transmission mode for the Msg1 as follows. The preamble is in a preamble set corresponding to the transmission mode for the Msg1.

In an optional embodiment, the method further includes the following. A first indication information sent from the network device is received, where the first indication information indicates a correspondence between the transmission mode for the Msg1 and the preamble set.

In an optional embodiment, the first indication information indicates the correspondence between the transmission mode for the Msg1 and the preamble set as follows. The first indication information indicates a preamble set for Msg1 non-repetition and/or a preamble set for Msg1 repetition; or the first indication information indicates a split point between the preamble set for Msg1 non-repetition and the preamble set for Msg1 repetition.

In an optional embodiment, the preamble set for Msg1 non-repetition and the preamble set for Msg1 repetition are orthogonal to each other.

In an optional embodiment, the preamble set for Msg1 repetition is in a preamble set for Msg3 repetition. The preamble set for Msg1 non-repetition includes a first subset and a second subset, where the first subset is in the preamble set for Msg3 repetition, the second subset is in a preamble set for Msg3 non-repetition, and the Msg3 is used to request to establish a radio resource control (RRC) connection.

In an optional embodiment, the preamble set for Msg3 non-repetition and the preamble set for Msg3 repetition are orthogonal to each other.

In an optional embodiment, the method further includes the following. A second indication information from the network device is received, where the second indication information indicates the preamble set for Msg3 repetition.

In an optional embodiment, the second indication information indicates the preamble set for Msg3 repetition as follows. The second indication information indicates a split point between the preamble set for Msg3 non-repetition and the preamble set for Msg3 repetition.

In an optional embodiment, the Msg1 is sent to the network device as follows. The Msg1 is sent to the network device on a physical random access channel (PRACH) occasion (RO) resource, where the RO resource corresponds to a synchronization signal and PBCH block (SSB), and a signal measurement result of the SSB is greater than or equal to a threshold.

In an optional embodiment, if the transmission mode for the Msg1 is repetition, a correspondence between RO resources and SSBs is a first correspondence. If the transmission mode for the Msg1 is non-repetition, a correspondence between RO resources and SSBs is a second correspondence. The first correspondence is different from the second correspondence.

In a second aspect, embodiments of the disclosure provide a message transmission method applied to a network device. The method includes the following. Msg1 sent by a terminal device is received, where the Msg1 includes a preamble. The preamble indicates a transmission mode for the Msg1, and the transmission mode includes repetition and non-repetition. A correspondence between SSBs and RO resources is determined based on the transmission mode.

Based on the description of the second aspect, the network device can determine the transmission mode for the Msg1 from the preamble in the Msg1 sent by the terminal device, so that the correspondence between SSBs and RO resources is determined based on the transmission mode, thereby realizing the coexistence between the terminal device that needs Msg1 repetition and the terminal device that does not need Msg1 repetition.

In an optional embodiment, the method further includes the following. If the Msg1 is received on a first RO resource, a first SSB is determined based on the correspondence and the first RO resource, where the first SSB is a SSB corresponding to the first RO resource.

In an optional embodiment, the preamble indicates the transmission mode for the Msg1 as follows. The preamble is in a preamble set corresponding to the transmission mode for the Msg1.

In an optional embodiment, the method further includes the following. A first indication information is sent to the terminal device, where the first indication information indicates a correspondence between the transmission mode for the Msg1 and the preamble set.

In an optional embodiment, the first indication information indicates the correspondence between the transmission mode for the Msg1 and the preamble set as follows. The first indication information indicates a preamble set for Msg1 non-repetition and/or a preamble set for Msg1 repetition; or the first indication information indicates a split point between the preamble set for Msg1 non-repetition and the preamble set for Msg1 repetition.

In an optional embodiment, the preamble set for Msg1 non-repetition and the preamble set for Msg1 repetition are orthogonal to each other.

In an optional embodiment, the preamble set for Msg1 repetition is in a preamble set for Msg3 repetition. The preamble set for Msg1 non-repetition includes a first subset and a second subset, where the first subset is in the preamble set for Msg3 repetition, the second subset is in a preamble set for Msg3 non-repetition, and the Msg3 is used to request to establish an RRC connection.

In an optional embodiment, the preamble set for Msg3 non-repetition and the preamble set for Msg3 repetition are orthogonal to each other.

In an optional embodiment, the method further includes the following. A second indication information is sent to the terminal device, where the second indication information indicates the preamble set for Msg3 repetition.

In an optional embodiment, the second indication information indicates the preamble set for Msg3 repetition as follows. The second indication information indicates a split point between the preamble set for Msg3 non-repetition and the preamble set for Msg3 repetition.

In a third aspect, embodiments of the disclosure provide a communication apparatus. The communication apparatus includes units configured to implement methods in any one of the possible embodiments of the first aspect and the second aspect.

In a fourth aspect, embodiments of the disclosure provide a communication apparatus. The communication apparatus includes a processor and a memory, where the processor and the memory are connected to each other. The memory is configured to store a computer program, the computer program includes a program instruction, and the processor is configured to invoke the program instruction to execute methods described in the first aspect or methods described in the second aspect.

In a fifth aspect, embodiments of the disclosure provide a chip. The chip includes a processor and an interface, and the processor is coupled to the interface. The interface is configured to receive or output a signal, and the processor is configured to execute a code instruction to cause methods described in the first aspect or methods described in the second aspect.

In a sixth aspect, embodiments of the disclosure provide a module device. The module device includes a communication module, a power supply module, a storage module, and a chip module. The power supply module is configured to provide electric energy for the module device. The storage module is configured to store data and instructions. The communication module is configured for internal communication of the module device, or configured for communication between the module device and an external device. The chip module is configured to execute methods described in the first aspect or methods described in the second aspect.

In a seventh aspect, embodiments of the disclosure provide a computer-readable storage medium. The computer-readable storage medium stores a computer program, the computer program includes a program instruction, and when executed by a processor, the program instruction causes the processor to execute methods described in the first aspect or methods described in the second aspect.

### BRIEF DESCRIPTION OF THE DRAWINGS

In order to describe technical solutions of embodiments of the disclosure more clearly, the following will give a brief introduction to the accompanying drawings used for describing the embodiments. Apparently, the accompanying drawings hereinafter described are some embodiments of the present disclosure. Based on these drawings, those of ordinary skill in the art can also obtain other drawings without creative effort.
FIG. 1 is a schematic structural diagram of a communication system provided in an embodiment of the disclosure.
FIG. 2 is a schematic diagram of a 4-step random access procedure provided in an embodiment of the disclosure.
FIG. 3a is a schematic diagram of a correspondence between SSBs and RO resources provided in an embodiment of the disclosure.
FIG. 3b is a schematic diagram of another correspondence between SSBs and RO resources provided in an embodiment of the disclosure.
FIG. 4 is a schematic flow chart of a message transmission method provided in an embodiment of the disclosure.
FIG. 5 is a schematic flow chart of another message transmission method provided in an embodiment of the disclosure.
FIG. 6a is a schematic diagram illustrating division of a contention-based preamble set provided in an embodiment of the disclosure.
FIG. 6b is a schematic diagram illustrating division of a non-contention-based preamble set provided in an embodiment of the disclosure.
FIG. 6c is a schematic diagram illustrating another division of a contention-based preamble set provided in an embodiment of the disclosure.
FIG. 6d is a schematic diagram illustrating another division of a non-contention-based preamble set provided in an embodiment of the disclosure.
FIG. 7 is a schematic structural diagram of a communication apparatus provided in an embodiment of the disclosure.
FIG. 8 is a schematic structural diagram of another communication apparatus provided in an embodiment of the disclosure.
FIG. 9 is a schematic structural diagram of a module device provided in an embodiment of the disclosure.

### DETAILED DESCRIPTION

The following will illustrate technical solutions of embodiments of the disclosure with reference to the accompanying drawings of embodiments of the disclosure.

It is to be noted that, in this specification, the terms "comprise", "include" or any other variation thereof, are intended to cover a non-exclusive inclusion, such that a process, method, article, or apparatus that includes a series of elements includes not only those elements but also other elements not expressly listed, or also includes elements inherent to such process, method, article, or apparatus. Without more limitations, an element defined by the phase "include a... " does not exclude there are additional identical elements in a process, method, article, or apparatus that includes the element. In addition, components, features, and elements with the same name in different embodiments of the disclosure may have the same meaning or may have different meanings, the specific meaning thereof needs to be determined by the explanation in the specific embodiment or further combined with the context in the specific embodiment.

It is to be understood that, in this specification, the term "and/or" is only an association relationship for describing associated objects, and indicates that three relationships may exist. For example, "A and/or B" may indicate three cases: A exists separately, A and B exist simultaneously, and B exists separately. In addition, the character "/" in this description indicates that the former and latter associated objects are in an "or" relationship.

It is to be understood that, "multiple" as used herein means two or more.

It is to be understood that, "the first", "the second", etc. appearing herein are only intended to illustrate and distinguish the described objects, and have no order, and do not represent a particular limitation to the number of devices in the embodiments of the disclosure, and cannot constitute any limitation to the embodiments of the disclosure.

It is to be understood that, in this specification, a unidirectional communication link from a network device to a terminal device is defined as a downlink, a channel or data transmitted on the downlink is a downlink channel or downlink data, and a transmission direction of the channel or the downlink data is referred to as a downlink direction. A unidirectional communication link from a terminal device to a network device is an uplink, a channel or data transmitted on the uplink is an uplink channel or uplink data, and a transmission direction of the uplink channel or the uplink data is referred to as an uplink direction.

The technical solution of the disclosure can be applied to a third generation mobile communication (3G) system, a fourth generation mobile communication (4G) system, and can also be applied to a fifth generation mobile communication (5G) system, and can also be referred to as a new radio (NR) system, or a sixth generation mobile communication (6G) system or other future communication systems.

The technical solution of the disclosure is also applicable to different network architectures, including but not limited to relay network architecture, dual link network architecture, and vehicle-to-everything communication architecture.

In the embodiments of the disclosure, a terminal device may refer to various forms of user equipment (UE), an access terminal, a subscriber unit, a subscriber station, a mobile station, a mobile station (MS), a remote station, a remote terminal, a mobile device, a user terminal, a wireless communication device, a user agent, or a user apparatus. The terminal device may also be a cellular telephone, a cordless telephone, a session initiation protocol (SIP) phone, a wireless local loop (WLL) station, a personal digital assistant (PDA), a handheld device having wireless communication capability, a computing device or other processing device connected to a wireless modem, a vehicle-mounted device, a wearable device, a terminal device in a 5G network or a future evolved public land mobile network (PLMN), which is not limited in the embodiments of the disclosure.

In the embodiments of the disclosure, a network device may be a device having a wireless transceiving function or a chip disposed in the device. The network device includes, but is not limited to, an evolved node B (eNB), a radio network controller (RNC), a node B (NB), a base station controller (BSC), a base transceiver station (BTS), a home network equipment (for example, a home evolved node B, or home node B (HNB)), a baseband unit (BBU), a wireless relay node, a wireless backhaul node, and a transmission point (a transmission and reception point (TRP) or a transmission point (TP)), or the like, and may also be a device used in systems such as 4G, 5G, and 6G, which is not limited herein.

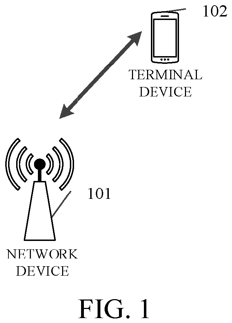

Reference is made to FIG. 1, which is a schematic structural diagram of a communication system provided in an embodiment of the disclosure. The communication system may include, but is not limited to, one or more network devices and one or more terminal devices. As illustrated in FIG. 1, for example, there is one network device 101 and one terminal device 102, where the network device 101 in FIG. 1 is for example a base station and the terminal device 102 is for example a mobile phone. The terminal device 102 may establish a wireless link with the network device 101 for communication. The communication system illustrated in FIG. 1 includes, but is not limited to, the network device and the terminal device, and can further include other communication devices. The number and form of the devices illustrated in FIG. 1 are used exemplarily and are not intended to limit the embodiments of the disclosure.

In some communication scenarios (for example, satellite communication), there are increasing needs for uplink coverage enhancement, especially for the uplink coverage enhancement of the random access procedure, mainly including the coverage enhancement of a physical random access channel (PRACH) and a physical uplink shared channel (PUSCH). Generally, the most direct method to enhance the uplink coverage is repetition transmission (repetition for short). For the random access procedure, Msg1 is sent in a manner of repetition to enhance the uplink coverage of the PRACH, and Msg3 is sent in a manner of repetition to enhance the uplink coverage of the PUSCH. However, in actual communication systems, there are usually two types of terminal devices. One type of terminal device has insufficient uplink coverage, such as a terminal device at an edge of a cell, and this type of terminal device needs Msg1 repetition. The other type of terminal device has better uplink coverage, such as a terminal device at a central region of a cell, and this type of terminal device does not need Msg1 repetition.

For Msg1 repetition, a new correspondence between synchronization signal and PBCH blocks (SSBs) and PRACH occasion (RO) resources needs to be designed. That is, a terminal device that needs Msg1 repetition and a terminal device that does not need Msg1 repetition may correspond to different correspondences between SSBs and RO resources. How to realize a coexistence between the terminal device that needs Msg1 repetition and the terminal device that does not need Msg1 repetition is a problem to be solved.

The disclosure proposes a solution to address the above problem, which includes the following. A terminal device determines a transmission mode for Msg1 (the Msg1 in the disclosure), where the transmission mode for the Msg1 is repetition mode or non-repetition mode. The terminal device sends the Msg1 to a network device, where the Msg1 includes a preamble, and the preamble indicates the transmission mode for the Msg1. The network device receives the Msg1 and determines a corresponding transmission mode based on the preamble in the Msg1. Based on the transmission mode, the network device can determine a correspondence between SSBs and RO resources. In the disclosure, the network device determines the correspondence between SSBs and RO resources based on the preamble in the Msg1, where the preamble indicates the transmission mode of the Msg1, thereby realizing the coexistence between the terminal device that needs Msg1 repetition and the terminal device that does not need Msg1 repetition.

Terminologies involved in the disclosure will be explained in the following.

### I. 4-step random access procedure

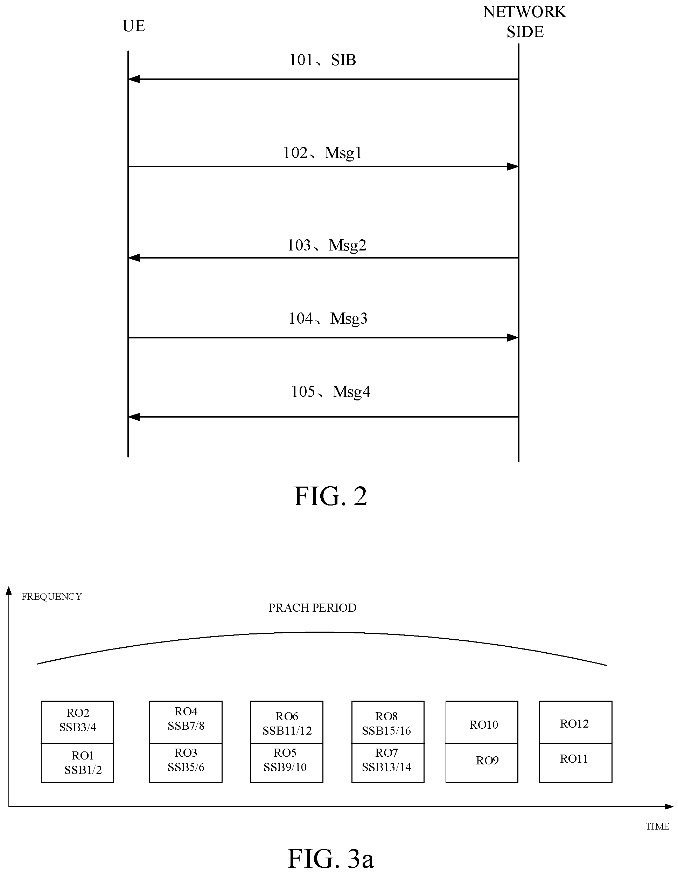

A 4-step random access procedure of a UE is explained below with reference to FIG. 2.

At 101, a network side sends a system information block (SIB) to a UE.

Optionally, the UE reads a master information block (MIB) and the SIB to complete downlink synchronization. By reading a SIB1, the UE determines a resource for sending Msg1 (including a preamble) to the network side.

At 102, the UE sends the Msg1 to the network side.

Optionally, the Msg1 includes the preamble, which may be called as a random access preamble, a preamble sequence, and the like. Specifically, a terminal device may select a PRACH resource, and the PRACH resource includes a time domain resource and a frequency domain resource. A selected preamble is sent on the selected PRACH resource.

At 103, the network side sends Msg2 to the UE.

Optionally, if the network side receives the Msg1 correctly, the network side sends a random access response message (Msg2) scrambled with a random radio network temporary identity (RA-RNTI) to the UE. For the UE side, after sending the Msg1, the UE may use the RA-RNTI to monitor the Msg2 from the network side to descramble the Msg2. The Msg2 may include a timing advance (TA), a temporary cell radio network temporary identifier (TC-RNTI), a power adjustment, and an indication of a resource used for sending Msg3 by the UE.

At 104, the UE sends the Msg3 to the network side.

Optionally, the UE sends the Msg3 to the network through uplink scheduling instruction in the Msg2.

At 105, the network side sends Msg4 to the UE.

Optionally, the network side notify the UE of the completion of the initial access procedure through the Msg4, otherwise the UE determines that the initial access procedure fails.

### II. Correspondence between SSBs and RO resources

Based on PRACH resource-related parameters, the UE can determine an RO resource pattern within a PRACH configuration period. When initiating the random access, the UE firstly determines a correspondence between SSBs and RO resources. The correspondence between SSBs and RO resources may be referred to as an association between SSBs and RO resources or a mapping relationship between SSBs and RO resources. Based on the correspondence between SSBs and RO resources, the UE determines a RO resource for initiating the random access, that is, the UE determines a RO resource for sending the Msg1.

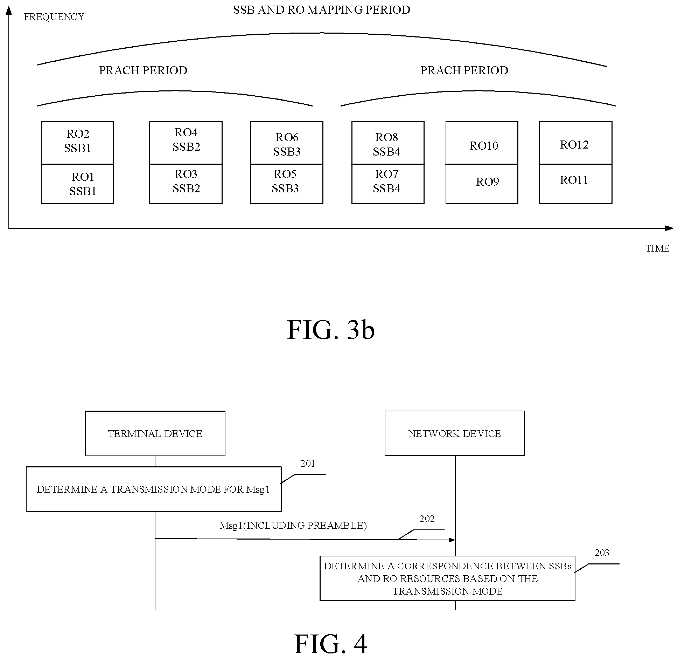

One SSB may correspond to one or more RO resources, and one RO resource may correspond to one or more SSBs. The correspondence between SSBs and RO resources will be exemplarily explained with reference to FIG. 3a and FIG. 3b in the following. As illustrated in FIG. 3a, one RO resource corresponds to two SSBs, for example, RO1 resource corresponds to SSB1 and SSB2. As illustrated in FIG. 3b, one SSB corresponds to multiple RO resources, for example, SSB1 may correspond to RO1 resource and RO2 resource.

In the existing protocol, Msg1 repetition is not needed, and there is only one correspondence between SSBs and RO resources. Since the correspondence between SSBs and RO resources of Msg1 repetition is different from that of Msg1 non-repetition, when the UE in the system needs Msg1 repetition, a new mechanism needs to be designed so that the network side can identify whether the current transmission of Msg1 is repetition or non-repetition, and then the correspondence between SSBs and RO resources may be determined.

It is to be noted that in the subsequent embodiments, "Msg1 repetition" may be replaced with "PRACH repetition", and "Msg1 non-repetition" may be replaced with "PRACH non-repetition". "Msg3 repetition" may be replaced with "PUSCH repetition", and "Msg3 non-repetition" may be replaced with "PUSCH non-repetition".

It is to be noted that in the embodiments of the disclosure, the Msg1 may also be referred to as a "random access request message", and the Msg3 may also be referred to as a "radio resource control (RRC) connection establishment request message". The Msg1 is used to request random access, and the Msg3 is used to request to establish an RRC connection.

Reference is made to FIG. 4, which is a schematic flow chart of a message transmission method provided in an embodiment of the disclosure. The message transmission method may be applied to the communication system illustrated in FIG. 1, and the message transmission method is explained from the perspective of interaction between a network device and a terminal device. The message transmission method includes the following operations.

At 201, a terminal device determines a transmission mode for Msg1, where the transmission mode for the Msg1 is repetition or non-repetition. The Msg1 is used to request random access.

The Msg1 includes a preamble. The terminal device determines the transmission mode for the Msg1 when performing PRACH transmission (or Msg1 transmission). The transmission mode may be repetition mode or non-repetition mode.

Exemplarily, the terminal device may determine the transmission mode for the Msg1 based on the signal quality of a measured reference signal. For example, the terminal device may determine the transmission mode for the Msg1 based on a measured reference signal receiving power (RSRP). If the measured RSRP is greater than or equal to a certain threshold, the transmission mode for the Msg1 is determined to be non-repetition. If the measured RSRP is smaller than the certain threshold, the transmission mode for the Msg1 is determined to be repetition. For example, the threshold may be X.

Exemplarily, the terminal device may determine the transmission mode for the Msg1 based on the location of the terminal device. For example, if the terminal device is at a central region of a cell, the terminal device determines that the transmission mode for the Msg1 is non-repetition. If the terminal device is at an edge of the cell, the terminal device determines that the transmission mode for the Msg1 is repetition.

If the transmission mode for the random access request message, i.e., the Msg1, is repetition, the terminal device further determines the number of repetitions. Exemplarily, the number of repetitions may be configured by a network device. Alternatively, the number of repetitions may be determined based on a configuration parameter, i.e., SSB-perRACH-Occasion in the RO resource-related configuration. The SSB-perRACH-Occasion indicates the number of SSBs associated with each RO resource. For example, if the SSB-perRACH-Occasion = 1/4 (meaning one SSB corresponds to four RO resources), the terminal device determines that the number of Msg1 repetitions is four.

At 202, the terminal device sends the Msg1 to the network device. The Msg1 includes a preamble that indicates the transmission mode for the Msg1. Correspondingly, the network device receives the Msg1.

In the disclosure, the preamble may also be referred to as a random access preamble. In some embodiments, the terminal device measures the SSB at first, and then determines an SSB with a signal measurement result (for example, RSRP) greater than a threshold as a first SSB. If there are multiple SSBs with signal measurement results (for example, RSRP) greater than the threshold, the terminal device may randomly select one of the multiple SSBs with a relatively high RSRP as the first SSB. The terminal device then determines an RO resource corresponding to (or mapping to, or relating to) the first SSB based on a correspondence between SSBs and RO resources. Then, the terminal device transmits the Msg1 on the RO resource corresponding to the first SSB, using the transmission mode determined in the operation at 201.

Optionally, for Msg1 repetition and Msg1 non-repetition, the correspondence between SSBs and RO resources may be different. For ease of description, in the disclosure, the correspondence between SSBs and RO resources corresponding to Msg1 repetition is referred to as a first correspondence, and the correspondence between SSBs and RO resources corresponding to Msg1 non-repetition is referred to as a second correspondence. The first correspondence may be different from the second correspondence. Since the first correspondence is different from the second correspondence, the same SSB may correspond to different RO resources in different correspondences.

In the disclosure, after the terminal device determines the transmission mode for the Msg1, the correspondence between SSBs and RO resources corresponding to the transmission mode is further determined. Then, the terminal device determines the RO resource corresponding to the first SSB based on the correspondence and sends the Msg1 on the determined RO resource. It is to be understood that, the first SSB is a SSB with a signal measurement result measured by the terminal device greater than the threshold. FIG. 3a is taken as an example for explanation, if the terminal device determines that the first SSB is SSB3, the terminal device determines based on the correspondence between SSBs and RO resources that an RO resource corresponding to the SSB3 is RO2, and then the terminal device sends the Msg1 on the RO2.

Further, in some embodiments, the terminal device may indicate the transmission mode for the Msg1 to the network device through the preamble in the Msg1. It is to be noted that the transmission mode for the Msg1 may be understood as a method for transmitting the Msg1, or a method for sending the Msg1, or a sending method of the Msg1.

Optionally, a preamble corresponding to the transmission mode for the Msg1 is determined, and the preamble is carried in the Msg1, which means that the Msg1 includes the preamble. Exemplarily, the network device may configure a preamble set for Msg1 repetition and a preamble set for Msg1 non-repetition. The preamble set for Msg1 non-repetition and the preamble set for Msg1 repetition are orthogonal to each other. It is to be noted that, there is no intersection between the preamble set for Msg1 repetition and the preamble set for Msg1 non-repetition. It is to be noted that, the preamble set for Msg1 repetition includes at least one first preamble, and the preamble set for Msg1 non-repetition includes at least one second preamble. The preamble set for Msg1 non-repetition and the preamble set for Msg1 repetition being orthogonal to each other may be understood as that each first preamble included in the preamble set for Msg1 repetition is orthogonal to all the second preambles included in the preamble set for Msg1 non-repetition respectively. For example, the preamble set for Msg1 repetition includes preamble 1 and preamble 2, and the preamble set for Msg1 non-repetition includes preamble 3 and preamble 4. The preamble set for Msg1 non-repetition and the preamble set for Msg1 repetition being orthogonal to each other may be understood as that preamble 1 is orthogonal to preamble 3 and preamble 4, and preamble 2 is orthogonal to preamble 3 and preamble 4.

If the transmission mode for the Msg1 is repetition, the terminal device selects one preamble from the preamble set for Msg1 repetition to send the Msg1. If the transmission mode for the Msg1 is non-repetition, the terminal device selects one preamble from the preamble set for Msg1 non-repetition to send the Msg1.

At 203, the network device determines a correspondence between SSBs and RO resources based on the transmission mode.

The network device may detect the preamble in the Msg1. For example, the network device detects a preamble on a first RO resource, and further determines a transmission mode for the Msg1 based on the preamble. The transmission mode is repetition or non-repetition. In one possible design, the network device may determine whether the preamble is in the preamble set for Msg1 repetition or in the preamble set for Msg1 non-repetition, and then determines the transmission mode for the Msg1.

In order to determine an SSB with a relatively good signal quality for the terminal device, that is, the first SSB determined when the terminal device transmits the Msg1, the network device further needs to determine, based on the correspondence between SSBs and RO resources, the first SSB corresponding to the first RO resource where the preamble is detected by the network device. Optionally, since the correspondences between SSBs and RO resources corresponding to different transmission modes for the Msg1 are different, the network device needs to further determine the correspondence between SSBs and RO resources based on the transmission mode for the Msg1. If the transmission method for the Msg1 is repetition, it is determined that the correspondence between SSBs and RO resources is the first correspondence, and if the transmission method for the Msg1 is non-repetition, it is determined that the correspondence between SSBs and RO resources is the second correspondence. The first correspondence is different from the second correspondence.

Based on the determined correspondence, the network device determines the first SSB corresponding to the first RO resource where the preamble is detected by the network device, and then sends a message 2 (i.e., Msg2) to the terminal device by using the SSB.

In the embodiments of the disclosure, the terminal device determines the transmission mode for the Msg1, and the transmission mode may be repetition or non-repetition. The terminal device sends the Msg1 to the network device, and the preamble in the Msg1 indicates the transmission mode for the Msg1. In this way, the preamble in the Msg1 indicates whether the terminal device performs Msg1 repetition, thereby realizing the coexistence between the terminal device that needs Msg1 repetition and the terminal device that does not need Msg1 repetition.

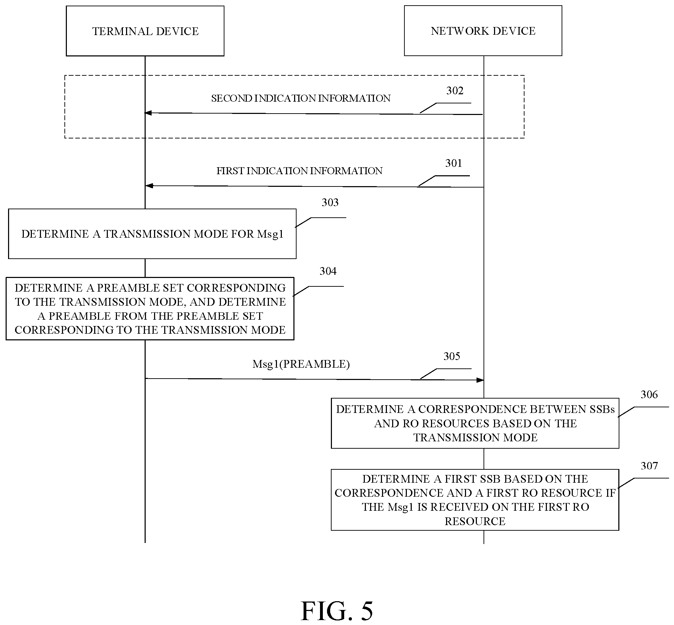

Reference is made to FIG. 5, which is a schematic flow chart of another message transmission method provided in an embodiment of the disclosure. The message transmission method may be applied to the communication system illustrated in FIG. 1, and the message transmission method is explained from the perspective of interaction between a network device and a terminal device. The message transmission method includes the following operations.

At 301, a network device sends a first indication information to a terminal device, where the first indication information indicates a correspondence between a transmission mode for Msg1 and a preamble set.

Optionally, the first indication information indicates a preamble set for Msg1 non-repetition and/or a preamble set for Msg1 repetition; or the first indication information indicates a split point between the preamble set for Msg1 non-repetition and the preamble set for Msg1 repetition. The preamble set for Msg1 repetition includes at least one preamble that indicates Msg1 repetition, and the preamble set for Msg1 non-repetition includes at least one preamble that indicates Msg1 non-repetition. The preamble set for Msg1 repetition and the preamble set for Msg1 non-repetition are orthogonal to each other. The preamble set for Msg1 repetition and the preamble set for Msg1 non-repetition being orthogonal to each other may be understood as that each preamble in the preamble set for Msg1 repetition is orthogonal to all the preambles in the preamble set for Msg1 non-repetition respectively, in other words, each preamble in the preamble set for Msg1 non-repetition is orthogonal to all the preambles in the preamble set for Msg1 repetition respectively. Correspondingly, the terminal device receives the first indication information, and determines the preamble set for Msg1 repetition and the preamble set for Msg1 non-repetition based on the first indication information.

In some optional embodiments, all the preambles that may be used by the terminal device constitute a total preamble set. The total preamble set may include contention-based preambles and non-contention-based preambles. The preamble set for Msg1 repetition and the preamble set for Msg1 non-repetition are in the total preamble set. The preamble set for Msg1 repetition being in the total preamble set may be understood as that the preamble set for Msg1 repetition is a subset or a universal set of the total preamble set. Likewise, the preamble set for Msg1 non-repetition being in the total preamble set may be understood as that the preamble set for Msg1 non-repetition is a subset or a universal set of the total preamble set. There is no intersection between the preamble set for Msg1 repetition and the preamble set for Msg1 non-repetition. The first indication information may indicate the preamble set for Msg1 non-repetition and/or the preamble set for Msg1 repetition.

In an optional embodiment, if the union of the preamble set for Msg1 repetition and the preamble set for Msg1 non-repetition is the total preamble set, it means the total preamble set is divided into the preamble set for Msg1 repetition and/or the preamble set for Msg1 non-repetition, and each preamble in the total preamble set is known to the terminal device, the first indication information may indicate one of the preamble set for Msg1 repetition and the preamble set for Msg1 non-repetition. Based on the first indication information, the terminal device can determine the other preamble set, that is, the other preamble set is a preamble set composed of preambles in the total preamble set other than preambles in the indicated preamble set.

In some optional embodiments, if the union of the preamble set for Msg1 repetition and the preamble set for Msg1 non-repetition is the total preamble set, it means the total preamble set is divided into the preamble set for Msg1 repetition and/or the preamble set for Msg1 non-repetition, and each preamble in the total preamble set corresponds to an index value respectively, the first indication information may also indicate a split point between the preamble set for Msg1 repetition and the preamble set for Msg1 non-repetition. The preambles in the total preamble set are grouped into the preamble set for Msg1 repetition and the preamble set for Msg1 non-repetition by the split point. Exemplarily, the split point may be a numerical value, that is, the first indication information indicates a numerical value, and the numerical value may be an index value, and may also not be an index value. The total preamble set is divided into the preamble set for Msg1 repetition and the preamble set for Msg1 non-repetition by the numerical value. An index value corresponding to each preamble in one of the preamble set for Msg1 repetition and the preamble set for Msg1 non-repetition is smaller than or equal to the numerical value, and an index value corresponding to each preamble in the other of the preamble set for Msg1 repetition and the preamble set for Msg1 non-repetition is greater than the numerical value. It is to be understood that, a preamble with an index value equal to the numerical value may be in the preamble set for Msg1 repetition or in the preamble set for Msg1 non-repetition.

In the embodiments of the disclosure, the first indication information may be sent through higher layer signaling, that is, the network device may configure the preamble set for Msg1 repetition and the preamble set for Msg1 non-repetition through higher layer signaling, where the higher layer signaling may include system information and RRC signaling.

In some optional embodiments, the preamble set for Msg1 repetition and the preamble set for Msg1 non-repetition provided in the disclosure may be in a contention-based preamble set or a non-contention-based preamble set. The contention-based preamble set includes at least one contention-based preamble, and the non-contention-based preamble set includes at least one non-contention-based preamble. The preamble set for Msg1 repetition being in the contention-based preamble set may be understood as that the preamble set for Msg1 repetition is a subset or a universal set of the contention-based preamble set. Likewise, the preamble set for Msg1 non-repetition being in the contention-based preamble set may be understood as that the preamble set for Msg1 non-repetition is a subset or a universal set of the contention-based preamble set. The above is also applicable to the non-contention-based preamble set.

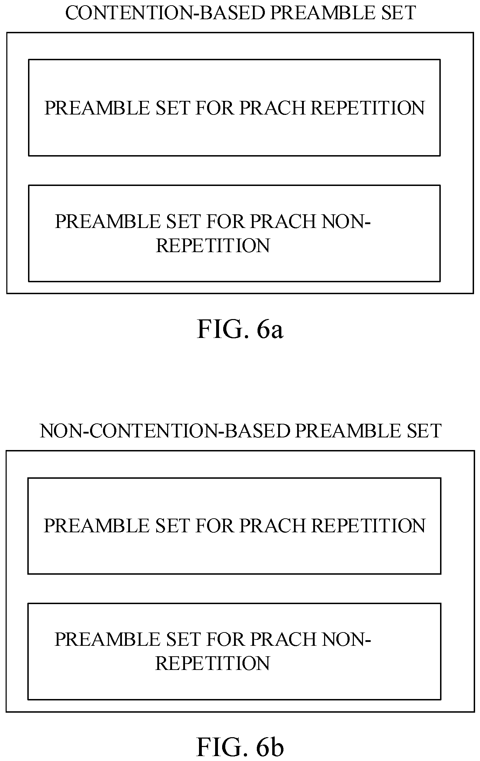

In an optional embodiment, the preamble set for Msg1 repetition and the preamble set for Msg1 non-repetition provided in the disclosure may be in a contention-based preamble set. Exemplarily, the union of the preamble set for Msg1 repetition and the preamble set for Msg1 non-repetition may be the contention-based preamble set, that is, the contention-based preamble set is divided into two subsets, which are the preamble set for Msg1 repetition and the preamble set for Msg1 non-repetition. As illustrated in FIG. 6a, the contention-based preamble set is divided into two sets, which are a preamble set for PRACH repetition (the preamble set for Msg1 repetition) and a preamble set for PRACH non-repetition (the preamble set for Msg1 non-repetition). Preambles in the preamble set for PRACH repetition indicate Msg1 repetition, and preambles in the preamble set for PRACH non-repetition indicate Msg1 non-repetition. It is to be understood that, in some optional embodiments, the union of the preamble set for Msg1 repetition and the preamble set for Msg1 non-repetition may be a subset, rather than a universal set, of the contention-based preamble set. That is, part of the contention-based preambles in the contention-based preamble set are grouped to obtain the preamble set for Msg1 repetition and the preamble set for Msg1 non-repetition.

For the contention-based preamble set, the first indication information may indicate the preamble set for Msg1 repetition and the preamble set for Msg1 non-repetition in various methods, and examples will be given below.

Method 1: the first indication information may include a split point between the preamble set for Msg1 repetition and the preamble set for Msg1 non-repetition. The split point is used for dividing the contention-based preamble set into the preamble set for Msg1 repetition and the preamble set for Msg1 non-repetition. An index value corresponding to each preamble in one of the preamble set for Msg1 repetition and the preamble set for Msg1 non-repetition is smaller than or equal to the numerical value of the split point, and an index value corresponding to each preamble in the other of the preamble set for Msg1 repetition and the preamble set for Msg1 non-repetition is greater than the numerical value of the split point.

Optionally, each preamble in the contention-based preamble set corresponds to an index value respectively. For example, an index value set composed of index values corresponding to all the preambles in the contention-based preamble set is {0, 1, 2, ..., 48}. The network device may indicate one split point, which may be a first index value. The preamble set for Msg1 repetition and the preamble set for Msg1 non-repetition may be determined based on the split point. It is to be understood that in this embodiment, the index value corresponding to each preamble in the preamble set for Msg1 repetition is smaller than or equal to the first index value, and the index value corresponding to each preamble in the preamble set for Msg1 non-repetition is greater than the first index value. In other embodiments, the index value corresponding to each preamble in the preamble set for Msg1 non-repetition is smaller than or equal to the first index value, and the index value corresponding to each preamble in the preamble set for Msg1 repetition is greater than the first index value, which is not limited in the disclosure. It is to be understood that, a preamble corresponding to an index value "equal to" the first index value may be in the preamble set for Msg1 repetition or the preamble set for Msg1 non-repetition.

For example, the index value set composed of index values corresponding to all the preambles in the contention-based preamble set is {0, 1, 2, ..., 48}, and the split point (i.e., the first index value) indicated by the network is 32. In this case, {0, 1, 2, ..., 31} in the contention-based preamble set is for Msg1 repetition, which means that preambles in the set of {0, 1, 2, ..., 31} indicate Msg1 repetition, while {32, 33, ..., 48} is for Msg1 non-repetition, which means that preambles in the set of {32, 33, ..., 48} indicate Msg1 non-repetition.

Method 2: the first indication information may include index values corresponding to the preambles in the preamble set for Msg1 repetition and/or the preambles in the preamble set for Msg1 non-repetition.

In some optional embodiments, the first indication information may include index values corresponding to all the preambles in the preamble set for Msg1 repetition, and/or, index values corresponding to all the preambles in the preamble set for Msg1 non-repetition.

In an embodiment, if the union of the preamble set for Msg1 repetition and the preamble set for Msg1 non-repetition is the contention-based preamble set, the network device indicates index values corresponding to all the preambles in the preamble set for Msg1 repetition or index values corresponding to all the preambles in the preamble set for Msg1 non-repetition through the first indication information. For example, the indication information includes index values corresponding to all the preambles in the preamble set for Msg1 repetition, and as such, preambles in the contention-based preamble set other than preambles in the preamble set for Msg1 repetition are preambles in the preamble set for Msg1 non-repetition. Likewise, the indication information may also include index values corresponding to all the preambles in the preamble set for Msg1 non-repetition, and preambles in the contention-based preamble set other than preambles in the preamble set for Msg1 non-repetition are preambles in the preamble set for Msg1 repetition. For example, if an index value set composed of index values corresponding to all the preambles in the contention-based preamble set is {0, 1, 2, ..., 48}, and the network device indicates through higher layer signaling that {0, 4, 8, 16, 20, 30, 40, 42, 45, 48} is the preamble set for Msg1 non-repetition, that is, each preamble in the set of {0, 4, 8, 16, 20, 30, 40, 42, 45, 48} indicates Msg1 non-repetition, other preambles in the contention-based preamble set are in the preamble set for Msg1 repetition.

In an embodiment, if the union of the preamble set for Msg1 repetition and the preamble set for Msg1 non-repetition is not the universal set of the contention-based preamble set but the subset of the contention-based preamble set, the indication information may include index values corresponding to all the preambles in the preamble set for Msg1 repetition and index values corresponding to all the preambles in the preamble set for Msg1 non-repetition.

In another optional embodiment, the preamble set for Msg1 repetition and the preamble set for Msg1 non-repetition provided in the disclosure may be in a non-contention-based preamble set. Exemplarily, the union of the preamble set for Msg1 repetition and the preamble set for Msg1 non-repetition may be the non-contention-based preamble set, that is, the non-contention-based preamble set is divided into two subsets, which are the preamble set for Msg1 repetition and the preamble set for Msg1 non-repetition. As illustrated in FIG. 6b, the non-contention-based preamble set is divided into two sets, which are the preamble set for PRACH repetition (the preamble set for Msg1 repetition) and the preamble set for PRACH non-repetition (the preamble set for Msg1 non-repetition). Preambles in the preamble set for PRACH repetition indicate Msg1 repetition, and preambles in the preamble set for PRACH non-repetition indicate Msg1 non-repetition. It is to be understood that, in some optional embodiments, the union of the preamble set for Msg1 repetition and the preamble set for Msg1 non-repetition may be a subset, rather than a universal set, of the non-contention-based preamble set. That is, part of the non-contention-based preambles in the non-contention-based preamble set are grouped to obtain the preamble set for Msg1 repetition and the preamble set for Msg1 non-repetition.

For the non-contention-based preamble set, the first indication information may indicate the preamble set for Msg1 repetition and the preamble set for Msg1 non-repetition in various methods, and examples will be given below.

Method 1: the first indication information may include a split point between the preamble set for Msg1 repetition and the preamble set for Msg1 non-repetition. The split point is used for dividing the non-contention-based preamble set into the preamble set for Msg1 repetition and the preamble set for Msg1 non-repetition. Optionally, the split point may be a first index value, that is, the first indication information includes the first index value. It is to be noted that, the first index value for the non-contention-based preamble set is different from the first index value for the contention-based preamble set in the above embodiments. An index value corresponding to each preamble in one of the preamble set for Msg1 repetition and the preamble set for Msg1 non-repetition is smaller than or equal to the first index value, and an index value corresponding to each preamble in the other of the preamble set for Msg1 repetition and the preamble set for Msg1 non-repetition is greater than the first index value.

Optionally, each preamble in the non-contention-based preamble set corresponds to an index value respectively. For example, an index value set composed of index values corresponding to all the preambles in the non-contention-based preamble set is {49, 50, 51, ..., 63}. The network device may indicate one split point, which may be the first index value. Each preamble in the preamble set for Msg1 repetition and each preamble in the preamble set for Msg1 non-repetition may be determined based on the split point. It is to be understood that in this embodiment, the index value corresponding to each preamble in the preamble set for Msg1 repetition is smaller than or equal to the first index value, and the index value corresponding to each preamble in the preamble set for Msg1 non-repetition is greater than the first index value. In other embodiments, the index value corresponding to each preamble in the preamble set for Msg1 non-repetition is smaller than or equal to the first index value, and the index value corresponding to each preamble in the preamble set for Msg1 repetition is greater than the first index value, which is not limited in the disclosure. It is to be understood that, a preamble corresponding to an index value "equal to" the first index value may be in the preamble set for Msg1 repetition or the preamble set for Msg1 non-repetition.

For example, the index value set composed of index values corresponding to all the preambles in the non-contention-based preamble set is {49, 50, 51, ..., 63}, and the split point (i.e., the first index value) indicated by the network is 59. In this case, {49, 50, 51, ..., 58} in the non-contention-based preamble set is for PRACH repetition, which means that preambles in the set of {49, 50, 51, ..., 58} indicate Msg1 repetition, while {59, 60, ..., 63} is for PRACH non-repetition, which means that preambles in the set of {59, 60, ..., 63} indicate Msg1 non-repetition.

Method 2: the first indication information may include index values corresponding to the preambles in the preamble set for Msg1 repetition and/or the preambles in the preamble set for Msg1 non-repetition.

In some optional embodiments, the first indication information may include index values corresponding to all the preambles in the preamble set for Msg1 repetition, and/or, index values corresponding to all the preambles in the preamble set for Msg1 non-repetition.

In an embodiment, if the union of the preamble set for Msg1 repetition and the preamble set for Msg1 non-repetition is the non-contention-based preamble set, the network device indicates the preamble set for Msg1 repetition or the preamble set for Msg1 non-repetition through the first indication information. For example, the first indication information includes index values corresponding to all the preambles in the preamble set for Msg1 repetition, and as such, preambles in the non-contention-based preamble set other than preambles in the preamble set for Msg1 repetition are preambles in the preamble set for Msg1 non-repetition. Likewise, the first indication information may also include index values corresponding to all the preambles in the preamble set for Msg1 non-repetition, and preambles in the non-contention-based preamble set other than preambles in the preamble set for Msg1 non-repetition are preambles in the preamble set for Msg1 repetition. For example, if an index value set composed of index values corresponding to all the preambles in the non-contention-based preamble set is {49, 50, 51, ..., 63}, and the network device indicates through higher layer signaling that {49, 51, 53, 55, 57, 59, 61, 63} is the preamble set for Msg1 non-repetition, that is, each preamble in the set of {49, 51, 53, 55, 57, 59, 61, 63} indicates Msg1 non-repetition, other preambles in the non-contention-based preamble set are in the preamble set for Msg1 repetition. It is to be understood that, in this case, the first indication information may also indicate the preamble set for Msg1 repetition and the preamble set for Msg1 non-repetition.

In another embodiment, if the union of the preamble set for Msg1 repetition and the preamble set for Msg1 non-repetition is not the universal set of the non-contention-based preamble set but the subset of the non-contention-based preamble set, the indication information may include index values corresponding to all the preambles in the preamble set for Msg1 repetition and index values corresponding to all the preambles in the preamble set for Msg1 non-repetition.

In some optional embodiments, the preamble set for Msg1 repetition is in a preamble set for Msg3 repetition. The preamble set for Msg1 non-repetition includes a first subset and a second subset, where the first subset is in the preamble set for Msg3 repetition, and the second subset is in a preamble set for Msg3 non-repetition. The first subset and the second subset are orthogonal to each other, which means that preambles in the first subset and preambles in the second subset are orthogonal to each other. The preamble set for Msg1 repetition being in the preamble set for Msg3 repetition may be understood as that the preamble set for Msg1 repetition is a subset or a universal set of the preamble set for Msg3 repetition. The first subset being in the preamble set for Msg3 repetition may be understood as that the first subset is a subset or a universal set of the preamble set for Msg3 repetition. The second subset being in the preamble set for Msg3 non-repetition may be understood as that the second subset is a subset or a universal set of the preamble set for Msg3 non-repetition.

In this embodiment, the preamble set for Msg3 repetition and the preamble set for Msg3 non-repetition need to be firstly determined. The preamble set for Msg3 non-repetition and the preamble set for Msg3 repetition are orthogonal to each other. The preamble set for Msg3 non-repetition and the preamble set for Msg3 repetition being orthogonal to each other may be understood as that preambles in the preamble set for Msg3 non-repetition and preambles in the preamble set for Msg3 repetition are orthogonal to each other. In the embodiment of the disclosure, the network device indicates the preamble set for Msg3 repetition and the preamble set for Msg3 non-repetition through a second indication information. Optionally, the disclosure may include an operation at 302, which will be described in the following.

At 302, the network device sends second indication information to the terminal device, where the second indication information indicates the preamble set for Msg3 repetition. Correspondingly, the terminal device receives the second indication information.

In some embodiments, the terminal device determines the preamble set for Msg3 repetition and the preamble set for Msg3 non-repetition based on the second indication information. The preamble set for Msg3 repetition includes at least one preamble that indicates Msg3 repetition, and the preamble set for Msg3 non-repetition includes at least one preamble that indicates Msg3 non-repetition. The preamble set for Msg3 repetition and the preamble set for Msg3 non-repetition are orthogonal to each other. There is no intersection between the preamble set for Msg3 repetition and the preamble set for Msg3 non-repetition.

In an optional embodiment, all the preambles that may be used by the terminal device constitute a total preamble set. The total preamble set may include contention-based preambles and non-contention-based preambles. Further, the total preamble set is divided into the preamble set for Msg3 repetition and the preamble set for Msg3 non-repetition. Each preamble in the total preamble set is known to the terminal device. The second indication information indicates the preamble set for Msg3 repetition and/or the preamble set for Msg3 non-repetition. Exemplarily, if the second indication information indicates one of the preamble set for Msg3 repetition and the preamble set for Msg3 non-repetition, the terminal device may determine the other preamble set, that is, the other preamble set is a preamble set composed of preambles in the total preamble set other than preambles in the indicated set.

In some optional embodiments, if the total preamble set is divided into the preamble set for Msg3 repetition and the preamble set for Msg3 non-repetition, and each preamble in the total preamble set corresponds to an index value respectively, the second indication information may also indicate a split point between the preamble set for Msg3 repetition and the preamble set for Msg3 non-repetition. The preambles in the total preamble set are grouped into the preamble set for Msg3 repetition and the preamble set for Msg3 non-repetition by the split point. The split point may be a numerical value, and the numerical value may be an index value, and may also not be an index value. An index value corresponding to each preamble in one of the preamble set for Msg3 repetition and the preamble set for Msg3 non-repetition is smaller than or equal to the numerical value of the split point, and an index value corresponding to each preamble in the other of the preamble set for Msg3 repetition and the preamble set for Msg3 non-repetition is greater than the numerical value of the split point.

It is to be understood that, in the above embodiment, the total preamble set may be a contention-based preamble set or a non-contention-based preamble set.

In an optional embodiment, preambles in the preamble set for Msg1 repetition and preambles in the preamble set for Msg1 non-repetition may be preambles in the contention-based preamble set. Optionally, the network device divides the contention-based preamble set into the preamble set for Msg3 repetition and the preamble set for Msg3 non-repetition. The preamble set for Msg3 repetition includes at least one preamble that indicates Msg3 repetition in the random access procedure. The preamble set for Msg3 non-repetition includes at least one preamble that indicates Msg3 non-repetition in the random access procedure.

The Msg1 is carried by a PRACH channel, and the Msg3 is carried by a PUSCH channel. The coverage of the PRACH channel is usually better than the coverage of the PUSCH channel. Therefore, if Msg3 repetition is not needed, Msg1 repetition is certainly not needed. In other words, Msg1 repetition is needed only when Msg3 repetition is needed by the terminal device.

Therefore, in order to be compatible with the transmission method for the Msg3, the network device may further divide the preamble set for Msg3 repetition. Some preambles in the preamble set for Msg3 repetition indicate Msg1 repetition, and some preambles in the preamble set for Msg3 repetition indicate Msg1 non-repetition. Preambles in the preamble set for Msg3 non-repetition may also indicate Msg1 non-repetition. In other words, the preamble set for Msg1 repetition may be a subset of the preamble set for Msg3 repetition. The preamble set for Msg 1 non-repetition may include another subset (referred to as a first subset in the disclosure) of the preamble set for Msg3 repetition and a subset or a universal set (referred to as a second subset in the disclosure) of the preamble set for Msg3 non-repetition.

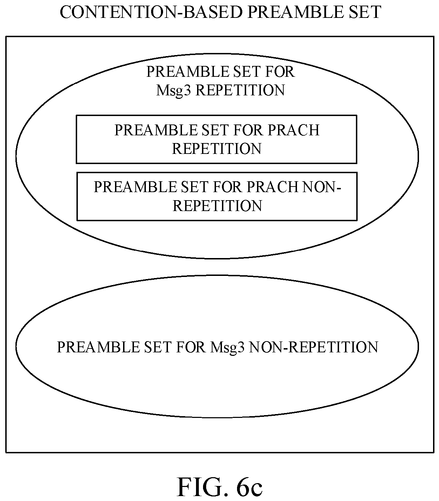

In the disclosure, for example, the union of the preamble set for Msg1 repetition and the first subset is used as the preamble set for Msg3 repetition, and the second subset is used as the preamble set for Msg3 non-repetition. FIG. 6c is a schematic diagram illustrating division of a contention-based preamble set provided in an embodiment of the disclosure. As illustrated in the figure, the contention-based preamble set is divided into a preamble set for Msg3 repetition and a preamble set for Msg3 non-repetition. Furthermore, the preamble set for Msg3 repetition is divided into a preamble set for PRACH repetition (i.e., a preamble set for Msg1 repetition) and a preamble set for PRACH non-repetition (i.e., the first subset). It is to be noted that the division of the preamble set for Msg3 repetition and the preamble set for Msg3 non-repetition may also be indicated by the network device.

In the embodiment of the disclosure, in order to obtain the preamble set for Msg1 repetition and the preamble set for Msg1 non-repetition, the first subset of the preamble set for Msg3 repetition needs to be obtained. The union of the first subset and the preamble set for Msg3 non-repetition is taken as the preamble set for Msg1 non-repetition. Preambles in the preamble set for Msg3 repetition other than preambles in the first subset constitute the preamble set for Msg1 repetition.

In the embodiment of the disclosure, the network device indicates through the first indication information that the preamble set for Msg3 repetition is divided into the first subset and the preamble set for Msg1 repetition. The first indication information may indicate the first subset and the preamble set for Msg1 repetition in various methods, and examples will be given below.

Method 1: the first indication information includes a second index value. The second index value is used for dividing the preamble set for Msg3 repetition into the first subset and the preamble set for Msg1 repetition. The second index value may be understood as a split point. An index value corresponding to each preamble in one of the first subset and the preamble set for Msg1 repetition is smaller than or equal to the second index value, and an index value corresponding to each preamble in the other of the first subset and the preamble set for Msg1 repetition is greater than the second index value.

Optionally, each preamble in the preamble set for Msg3 repetition corresponds to an index value respectively. For example, an index value set composed of index values corresponding to all the preambles in the preamble set for Msg3 repetition is {0, 1, 2, ..., 32}. The network device may indicate one split point, which may be the second index value. The first subset and the preamble set for Msg1 repetition may be determined based on the split point. It is to be understood that in this embodiment, the index value corresponding to each preamble in the first subset is smaller than or equal to the second index value, and the index value corresponding to each preamble in the preamble set for Msg1 repetition is greater than the second index value. In other embodiments, the index value corresponding to each preamble in the preamble set for Msg1 repetition is smaller than or equal to the second index value, and the index value corresponding to each preamble in the first subset is greater than the second index value, which is not limited in the disclosure. It is to be understood that, a preamble corresponding to an index value "equal to" the second index value may be in the first subset or the preamble set for Msg1 repetition.

For example, the index value set composed of index values corresponding to all the preambles in the preamble set for Msg3 repetition is {0, 1, 2, ..., 32}, and the split point (i.e., the second index value) indicated by the network is 16. In this case, the preamble set for Msg1 repetition is {0, 1, 2, ..., 15}. Optionally, preambles in the preamble set for Msg1 repetition may indicate Msg3 repetition. The first subset {16, 17, ..., 32} is for PRACH non-repetition, which means that preambles in the first subset all indicate Msg1 non-repetition. Optionally, preambles in the first subset may indicate Msg3 repetition.

Method 2: the first indication information may include index values corresponding to the preambles in the first subset and/or the preambles in the preamble set for Msg1 repetition.

In an embodiment, if the union of the first subset and the preamble set for Msg1 repetition is the preamble set for Msg3 repetition, the network device may indicate the first subset or the preamble set for Msg1 repetition through the indication information. For example, the indication information includes index values corresponding to all the preambles in the first subset, and as such, preambles in the preamble set for Msg3 repetition other than preambles in the first subset are preambles in the preamble set for Msg1 repetition. Likewise, the indication information may also include index values corresponding to all the preambles in the preamble set for Msg1 repetition, and preambles in the contention-based preamble set other than preambles in the second subset are preambles in the first subset.

In an embodiment, if the union of the first subset and the preamble set for Msg1 repetition is not the universal set of the preamble set for Msg3 repetition but the subset of the preamble set for Msg3 repetition, the indication information may include index values corresponding to all the preambles in the first subset and index values corresponding to all the preambles in the preamble set for Msg1 repetition.

There is no need to divide the preamble set for Msg3 non-repetition. If the terminal device selects a preamble in the preamble set for Msg3 non-repetition and sends the preamble through the Msg1, it is assumed that the terminal device does not need Msg1 repetition.

In an optional embodiment, preambles in the preamble set for Msg3 repetition and preambles in the preamble set for Msg3 non-repetition may be preambles in the non-contention-based preamble set. Optionally, the network device divides the non-contention-based preamble set into the preamble set for Msg3 repetition and the preamble set for Msg3 non-repetition. The preamble set for Msg3 repetition includes at least one preamble that indicates Msg3 repetition in the random access procedure. The preamble set for Msg3 non-repetition includes at least one preamble that indicates Msg3 non-repetition in the random access procedure. For example, an index value set composed of index values corresponding all the preambles in the non-contention-based preamble set is {49, 50, 51, ..., 63}, which is further divided into the preamble set for Msg3 repetition {49, 50, 51, ..., 58} and the preamble set for Msg3 non-repetition {59, 60, 61, ..., 63}.

The Msg1 is carried by a PRACH channel, and the Msg3 is carried by a PUSCH channel. The coverage of the PRACH channel is usually better than the coverage of the PUSCH channel. Therefore, if Msg3 repetition is not needed, Msg1 repetition is certainly not needed. In other words, Msg1 repetition is needed only when Msg3 repetition is needed by the terminal device.

Therefore, in order to be compatible with the transmission method for the Msg3, the network device may further divide the preamble set for Msg3 repetition to obtain the first subset and the preamble set for Msg1 repetition. It is to be understood that, the first subset and the preamble set for Msg1 repetition are orthogonal to each other. The union of the first subset and the preamble set for Msg1 repetition may be a universal set or a subset of the preamble set for Msg3 repetition, which is not limited in the disclosure. In the disclosure, for example, the union of the first subset and the preamble set for Msg1 repetition is the universal set of the preamble set for Msg3 repetition, and the second subset is the universal set of the preamble set for Msg3 non-repetition.

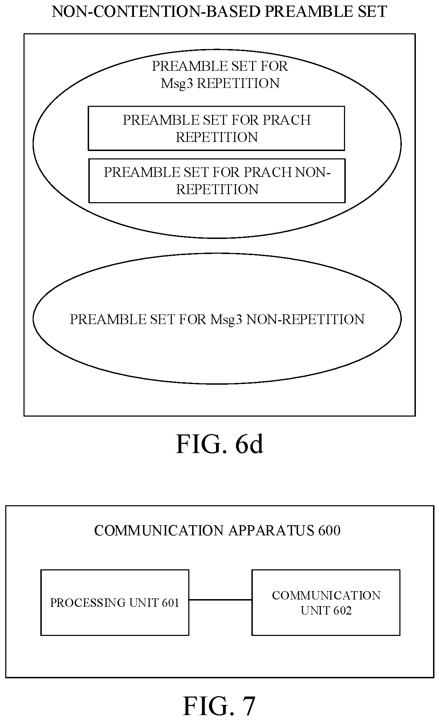

FIG. 6d is a schematic diagram illustrating another division of a non-contention-based preamble set provided in an embodiment of the disclosure. As illustrated in the figure, the non-contention-based preamble set is divided into the preamble set for Msg3 repetition and the preamble set for Msg3 non-repetition. Furthermore, the preamble set for Msg3 repetition is divided into a preamble set for PRACH repetition (i.e., a preamble set for Msg1 repetition) and a preamble set for PRACH non-repetition (i.e., the first subset). It is to be noted that the division of the preamble set for Msg3 repetition and the preamble set for Msg3 non-repetition may also be indicated by the network device.

In the embodiment of the disclosure, in order to obtain the preamble set for Msg1 repetition and the preamble set for Msg1 non-repetition, the first subset of the preamble set for Msg3 repetition needs to be obtained. The union of the first subset and the preamble set for Msg3 non-repetition is taken as the preamble set for Msg1 non-repetition. Preambles in the preamble set for Msg3 repetition other than preambles in the first subset constitute the preamble set for Msg1 repetition.

In the embodiment of the disclosure, the network device indicates through the first indication information that the preamble set for Msg3 repetition is divided into the first subset and the preamble set for Msg1 repetition. The first indication information may indicate the first subset and the preamble set for Msg1 repetition in various methods, and examples will be given below.

Method 1: the first indication information includes a second index value. The second index value is used for dividing the preamble set for Msg3 repetition into the first subset and the preamble set for Msg1 repetition. An index value corresponding to each preamble in one of the first subset and the preamble set for Msg1 repetition is smaller than or equal to the second index value, and an index value corresponding to each preamble in the other of the first subset and the preamble set for Msg1 repetition is greater than the second index value.

Optionally, each preamble in the preamble set for Msg3 repetition corresponds to an index value respectively. For example, an index value set composed of index values corresponding to all the preambles in the preamble set for Msg3 repetition is {49, 50, 51, ..., 58}. The network device may indicate one split point, which may be the second index value. The first subset and the preamble set for Msg1 repetition may be determined based on the split point. It is to be understood that in this embodiment, the index value corresponding to each preamble in the first subset is smaller than or equal to the second index value, and the index value corresponding to each preamble in the preamble set for Msg1 repetition is greater than the second index value. In other embodiments, the index value corresponding to each preamble in the preamble set for Msg1 repetition is smaller than or equal to the second index value, and the index value corresponding to each preamble in the first subset is greater than the second index value, which is not limited in the disclosure. It is to be understood that, a preamble corresponding to an index value "equal to" the second index value may be in the first subset or the preamble set for Msg1 repetition.

For example, the index value set composed of index values corresponding to all the preambles in the preamble set for Msg3 repetition is {49, 50, 51, ..., 58}, and the split point (i.e., the second index value) indicated by the network is 53. In this case, the preamble set for Msg1 repetition in the preamble set for Msg3 repetition is {49, 50, ..., 52}. Optionally, preambles in the preamble set for Msg1 repetition may indicate Msg3 repetition. The first subset {53, 54, ..., 58} is for the PRACH non-repetition, which means that preambles in the first subset all indicate Msg1 non-repetition. Optionally, preambles in the first subset may indicate Msg3 repetition.

Method 2: the first indication information may include index values corresponding to the preambles in the first subset and/or the preambles in the preamble set for Msg1 repetition.

In an embodiment, if the union of the first subset and the preamble set for Msg1 repetition is the preamble set for Msg3 repetition, the network device indicates the first subset or the preamble set for Msg1 repetition through the first indication information. For example, the first indication information includes index values corresponding to all the preambles in the first subset, and as such, preambles in the preamble set for Msg3 repetition other than preambles in the first subset are preambles in the preamble set for Msg1 repetition. Likewise, the first indication information may also include index values corresponding to all the preambles in the preamble set for Msg1 repetition, and preambles in the preamble set for Msg3 repetition other than preambles in the preamble set for Msg1 repetition are preambles in the first subset.

In an embodiment, if the union of the first subset and the preamble set for Msg1 repetition is not the universal set of the preamble set for Msg3 repetition but the subset of the preamble set for Msg3 repetition, the indication information may include index values corresponding to all the preambles in the first subset and index values corresponding to all the preambles in the preamble set for Msg1 repetition.

There is no need to divide the preamble set for Msg3 non-repetition. If the terminal device selects a preamble in the preamble set for Msg3 non-repetition and sends the preamble through the Msg1, it is assumed that the terminal device does not need Msg1 repetition.

At 303, the terminal device determines the transmission mode for the Msg1, where the transmission mode is repetition or non-repetition.

For the operation at 302 please refer to the operation at 202 in the embodiments of FIG. 4, which will not be repeated herein.

At 304, the terminal device determines a preamble set corresponding to the transmission mode, and determines a preamble from the preamble set corresponding to the transmission mode, where the preamble set corresponding to the transmission mode is the preamble set for Msg1 repetition or the preamble set for Msg1 non-repetition.

Since different transmission modes correspond to different preamble sets, the terminal device needs to select a preamble from a corresponding preamble set based on the transmission mode. For example, if the transmission mode is repetition, the preamble set is determined to be the preamble set for Msg1 repetition and a preamble is selected from the preamble set for Msg1 repetition. If the transmission mode is non-repetition, the preamble set is determined to be the preamble set for Msg1 non-repetition and a preamble is selected from the preamble set for Msg1 non-repetition.

It is to be noted that, if both the transmission mode for the Msg1 and the transmission mode for the Msg3 need to be indicated, a preamble may be determined in the following method. For Msg1 non-repetition and Msg3 non-repetition, a preamble in the second subset is selected. For Msg3 repetition and Msg1 repetition, a preamble in the preamble set for Msg1 repetition is selected. For Msg3 repetition and Msg1 non-repetition, a preamble in the first subset is selected.

At 305, the terminal device sends the Msg1 to the network device. The Msg1 includes a preamble that indicates the transmission mode for the Msg1. Correspondingly, the network device receives the Msg1.

At 306, the network device determines a correspondence between SSBs and RO resources based on the transmission mode.

For the operation at 304 and 305, please refer to the operation at 202 and 203 in the embodiments of FIG. 4, which will not be repeated herein.

At 307, if the network device receives the Msg1 on the first RO resource, the network device determines the first SSB based on the correspondence and the first RO resource.

Further, the network device determines the first SSB corresponding to the first RO resource based on the correspondence, and then sends the Msg2 to the terminal device by using the first SSB.

Reference is made to FIG. 7, which is a schematic structural diagram of a communication apparatus provided in an embodiment of the disclosure. The apparatus may be a terminal device, an apparatus in a terminal device, or an apparatus that can be matched with a terminal device for use. A communication apparatus 600 illustrated in FIG. 7 may include a processing unit 601 and a communication unit 602. The processing unit 601 is configured to perform data processing. The communication unit 602 integrates a receiving unit and a sending unit, and may also be referred to as a transceiver unit. Alternatively, the communication unit 602 may be split into a receiving unit and a sending unit. The processing unit 601 in the following is similar to the communication unit 602, which will not be described again herein.

The processing unit 601 is configured to determine a transmission mode for Msg1, where the transmission mode for the Msg1 is repetition or non-repetition.

The communication unit 602 is configured to send the Msg1 to a network device, where the Msg1 includes a preamble, and the preamble indicates the transmission mode for the Msg1.

In an optional embodiment, the preamble indicates the transmission mode for the Msg1 as follows. The preamble is in a preamble set corresponding to the transmission mode for the Msg1.

In an optional embodiment, the communication unit 602 is further configured to receive a first indication information sent from the network device, where the first indication information indicates a correspondence between the transmission mode for the Msg1 and the preamble set.

In an optional embodiment, the first indication information indicates the correspondence between the transmission mode for the Msg1 and the preamble set as follows. The first indication information indicates a preamble set for Msg1 non-repetition and/or a preamble set for Msg1 repetition; or the first indication information indicates a split point between the preamble set for Msg1 non-repetition and the preamble set for Msg1 repetition.

In an optional embodiment, the preamble set for Msg1 non-repetition and the preamble set for Msg1 repetition are orthogonal to each other.

In an optional embodiment, the preamble set for Msg1 repetition is in a preamble set for Msg3 repetition. The preamble set for Msg1 non-repetition includes a first subset and a second subset, where the first subset is in the preamble set for Msg3 repetition, the second subset is in a preamble set for Msg3 non-repetition, and the Msg3 is used to request to establish an RRC connection.

In an optional embodiment, the preamble set for Msg3 non-repetition and the preamble set for Msg3 repetition are orthogonal to each other.

In an optional embodiment, the communication unit 602 is further configured to receive a second indication information from the network device, where the second indication information indicates the preamble set for Msg3 repetition.

In an optional embodiment, the second indication information indicates the preamble set for Msg3 repetition as follows. The second indication information indicates a split point between the preamble set for Msg3 non-repetition and the preamble set for Msg3 repetition.

In an optional embodiment, the communication unit 602 is configured to send the Msg1 to the network device on an RO resource, where the RO resource corresponds to a SSB, and a signal measurement result of the SSB is greater than or equal to a threshold.

In an optional embodiment, if the transmission mode for the Msg1 is repetition, a correspondence between RO resources and SSBs is a first correspondence. If the transmission mode for the Msg1 is non-repetition, a correspondence between RO resources and SSBs is a second correspondence. The first correspondence is different from the second correspondence.

For the related content of this embodiment, reference can be made to the above method embodiments, which will not be described again herein.

Reference is made to FIG. 7, which is a schematic structural diagram of a communication apparatus provided in an embodiment of the disclosure. The apparatus may be a terminal device, an apparatus in a terminal device, or an apparatus that can be matched with a terminal device for use. A communication apparatus 600 illustrated in FIG. 7 may include a processing unit 601 and a communication unit 602. The processing unit 601 is configured to perform data processing. The communication unit 602 integrates a receiving unit and a sending unit, and may also be referred to as a transceiver unit. Alternatively, the communication unit 602 may be split into a receiving unit and a sending unit. The processing unit 601 in the following is similar to the communication unit 602, which will not be described again herein.

The communication unit 602 is configured to receive Msg1 sent by a terminal device, where the Msg1 includes a preamble, the preamble indicates a transmission mode for the Msg1, and the transmission mode includes repetition or non-repetition.

The processing unit 601 is configured to determine a correspondence between SSBs and RO resources based on the transmission mode.

In an optional embodiment, the processing unit 601 is further configured to determine a first SSB based on the correspondence and a first RO resource if the Msg1 is received on the first RO resource, where the first SSB is a SSB corresponding to the first RO resource.

In an optional embodiment, the preamble indicates the transmission mode for the Msg1 as follows. The preamble is in a preamble set corresponding to the transmission mode for the Msg1.

In an optional embodiment, the communication unit 602 is further configured to send a first indication information to the terminal device, where the first indication information indicates a correspondence between the transmission mode for the Msg1 and the preamble set.

In an optional embodiment, the first indication information indicates the correspondence between the transmission mode for the Msg1 and the preamble set as follows. The first indication information indicates a preamble set for Msg1 non-repetition and/or a preamble set for Msg1 repetition; or the first indication information indicates a split point between the preamble set for Msg1 non-repetition and the preamble set for Msg1 repetition.

In an optional embodiment, the preamble set for Msg1 non-repetition and the preamble set for Msg1 repetition are orthogonal to each other.

In an optional embodiment, the preamble set for Msg1 repetition is in a preamble set for Msg3 repetition. The preamble set for Msg1 non-repetition includes a first subset and a second subset, where the first subset is in the preamble set for Msg3 repetition, the second subset is in a preamble set for Msg3 non-repetition, and the Msg3 is used to request to establish an RRC connection.

In an optional embodiment, the preamble set for Msg3 non-repetition and the preamble set for Msg3 repetition are orthogonal to each other.

In an optional embodiment, the communication unit 602 is further configured to send a second indication information to the terminal device, where the second indication information indicates the preamble set for Msg3 repetition.

In an optional embodiment, the second indication information indicates the preamble set for Msg3 repetition as follows. The second indication information indicates a split point between the preamble set for Msg3 non-repetition and the preamble set for Msg3 repetition.

For the related content of this embodiment, reference can be made to the above method embodiments, which will not be described again herein.

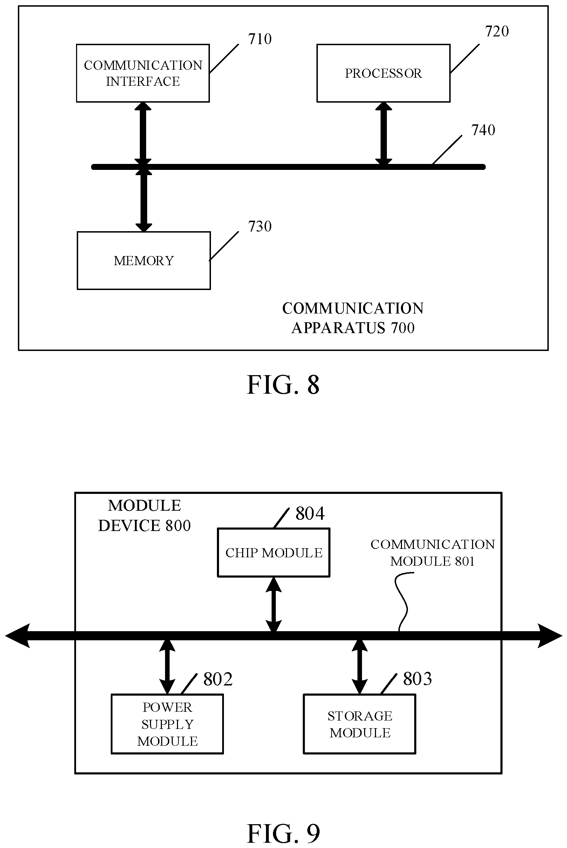

Reference is made to FIG. 8, which is a schematic structural diagram of another communication apparatus provided in an embodiment of the disclosure. The communication apparatus is configured to realize the functions of the terminal devices illustrated in the above FIG. 4 and FIG. 5. A communication apparatus 700 may be a terminal device or an apparatus applied to a terminal device. The apparatus applied to the terminal device may be a chip system in the terminal device or a chip. The chip system may include a chip, or may include a chip and other discrete components.

Alternatively, the communication apparatus 700 is configured to realize the functions of the network devices illustrated in the above FIG. 4 and FIG. 5. The communication apparatus 700 may be a network device or an apparatus applied to a network device. The apparatus applied to the network device may be a chip system in the network device or a chip.

The communication apparatus 700 includes at least one processor 720, configured to implement a data processing function of the terminal device or the network device in the methods provided in embodiments of the disclosure. The communication apparatus 700 further includes a communication interface 710, configured to implement receiving and sending operations of the terminal device or the network device in the methods provided in embodiments of the disclosure. In embodiments of the disclosure, the processor 720 may be a central processing unit (CPU), or the processor 720 may be another general purpose processor, a digital signal processor (DSP), an application specific integrated circuit (ASIC), a field-programmable gate array (FPGA) or another programmable logic device, a discrete gate or a transistor logic device, a discrete hardware component, or the like. The general purpose processor may be a microprocessor, or this processor may be any normal processor, or the like. In embodiments of the disclosure, the communication interface 710 may be a transceiver, a circuit, a bus, a module, or a communication interface of another type, and is configured to communicate with another device through a transmission medium. For example, the communication interface 710 is used by an apparatus in the communication apparatus 700 to communicate with another device. The processor 720 receives and sends data through the communication interface 710, and is configured to implement the methods in the foregoing method embodiments illustrated in FIG. 4 and FIG. 5.

The communication apparatus 700 further includes at least one memory 730, configured to store program instructions and/or data. The memory 730 is coupled to the processor 720. Coupling in embodiments of the disclosure is indirect coupling or a communication connection between apparatuses, units, or modules, and is in an electrical, mechanical, or another form, and is used for information exchange between the apparatuses, units, or modules. The processor 720 cooperates with the memory 730. The processor 720 executes the program instructions stored in the memory 730. At least one of the at least one memory is included in the processor.

After the communication apparatus 700 is powered on, the processor 720 reads a software program in the memory 730, explain and execute instructions of the software program, and process data of the software program. When data needs to be wirelessly sent, after performing baseband processing on the to-be-sent data, the processor 720 outputs a baseband signal to a radio frequency circuit (not illustrated in the drawings). After performing radio frequency processing on the baseband signal, the radio frequency circuit sends a radio frequency signal in a form of electromagnetic wave through the antenna. When data is sent to the communication apparatus 700, the radio frequency circuit receives the radio frequency signal through the antenna, converts the radio frequency signal into a baseband signal, and outputs the baseband signal to the processor 720, and the processor 720 converts the baseband signal into data and processes the data.

In another embodiment, the radio frequency circuit and the antenna may be disposed independent of a processor 720 that performs baseband processing. For example, in a distributed scenario, the radio frequency circuit and the antenna may be disposed remotely independent of the communication apparatus.

A specific connection medium between the communication interface 710, the processor 720, and the memory 730 is not limited in embodiments of the disclosure. In the embodiments of the disclosure, for example, in FIG. 8, the memory 730, the processor 720, and the communication interface 710 are connected through a bus 740. The bus 740 is represented by a bold line in FIG. 8. A connection manner between other components is merely described for illustration, and is not limited thereto. The bus 740 may be classified into an address bus, a data bus, a control bus, and the like. For ease of representation, only one bold line is used for representing the bus 740 in FIG. 8, but this does not mean that there is only one bus or only one type of bus.

When the communication apparatus 700 is specifically an apparatus in a terminal device, for example, when the communication apparatus 700 is specifically a chip or a chip system, the communication interface 710 may output or receive a baseband signal. When the communication apparatus 700 is specifically the terminal device, the communication interface 710 may output or receive a radio frequency signal.

It is to be noted that, the communication apparatus may execute operations related to the terminal device or the network device in the foregoing method embodiments. For details, reference may be made to the implementation provided in the foregoing operations, and details are not repeatedly described herein.

With regard to various devices and products applied to or integrated into a communication apparatus, various modules contained therein can all be realized by means of circuit and hardware. Different modules may be located in the same component (for example, a chip, a circuit module, and the like) or different components in the terminal. Alternatively, at least some of the modules may be implemented by using a software program running on a processor integrated inside the terminal, the remaining (if any) part of the modules may be implemented by hardware such as circuits.

The above memory may be volatile memory or non-volatile memory, or may include both volatile and non-volatile memory. The non-volatile memory may be a read-only memory (ROM), a programmable read-only memory (PROM), an erasable programmable read-only memory (EPROM), an electrically erasable programmable read-only memory (EEPROM), or a flash memory. Volatile memory may be random access memory (RAM), which serves as an external cache, by way of example and not limitation. Many forms of RAM are available, such as static RAM (SRAM), dynamic RAM (DRAM), synchronous dynamic RAM (SDRAM), double data rate SDRAM (DDR SDRAM), enhanced SDRAM (ESDRAM), sync link DRAM (SLDRAM), and direct rambus RAM (DR RAM).

Embodiments of the disclosure provide a chip. The chip includes a processor and a memory, where the number of the processor may be one or more, and the number of the memory may be one or more. The processor may execute the foregoing message transmission method illustrated in FIG. 4 and FIG. 5 and operations in related embodiments by reading an instruction and data stored in the memory.

As illustrated in FIG. 9, which is a schematic structural diagram of a module device provided in an embodiment of the disclosure. The module device 800 may execute operations related to the terminal device in the foregoing method embodiments. The module device 800 includes: a communication module 801, a power supply module 802, a storage module 803, and a chip module 804. The power supply module 802 is configured to provide electric energy for the module device 800. The storage module 803 is configured to store data and instructions. The communication module 801 is configured for internal communication of the module device 800, or configured for communication between the module device 800 and an external device. The chip module 804 may perform the operations of the message transmission method illustrated in FIG. 4 and FIG. 5 and the operations in related embodiments.

Embodiments of the disclosure further provide a computer-readable storage medium. The computer-readable storage medium stores a computer program. The computer program comprises a program instruction. When the program instruction is executed by a processor, the message transmission method illustrated in FIG. 4 and FIG. 5 and operations in related embodiments can be executed.

The computer-readable storage medium may be an internal storage unit of the terminal device or the network device of any one of the foregoing embodiments, for example, a hard disk or a memory of the device. The computer-readable storage medium may also be an external storage device of the terminal device or the network device, such as a plug-in hard disk, a smart memory card (SMC), a secure digital (SD) card, and a flash card that is equipped on the device. Further, the computer-readable storage medium may also include both an internal storage unit of the terminal device or the network device and an external storage device. The computer-readable storage medium is configured to store the computer program and other programs and data required by the terminal device or the network device. The computer-readable storage medium may also be used to temporarily store data that has been output or is to be output. The computer-readable storage medium may be any available medium that can be accessed by a computer, or a data storage device such as a server or a data center that includes one or more available media sets. The useable medium may be a magnetic medium (e. g., floppy disk, hard disk, magnetic tape), an optical medium (e. g., digital video disc (DVD)), or a semiconductor medium. The semiconductor medium may be a solid state disk.

Embodiments described above may be implemented in whole or in part by software, hardware, firmware, or any combination thereof. When implemented by software, the embodiments described above may be implemented in whole or in part in the form of a computer program product. The computer program product includes one or more computer instructions or computer programs. When the computer instructions or computer programs are loaded or executed on a computer, a procedure or function according to the embodiments of the disclosure is completely or partially generated. The computer may be a general purpose computer, a special purpose computer, a computer network, or other programmable apparatus. The computer instruction may be stored in a computer-readable storage medium, or transmitted from one computer-readable storage medium to another computer-readable storage medium. For example, the computer instructions may be transmitted from one website, computer, server, or data center to another website, computer, server, or data center in a wired or wireless manner.

It is to be understood that, in various embodiments of the disclosure, a sequence number of each of the foregoing processes does not imply an execution sequence, and an execution sequence of each of the processes should be determined according to a function and an internal logic thereof, which should not constitute any limitation to an implementation process of the embodiments of the disclosure.

In the several embodiments provided in the disclosure, it is to be understood that the disclosed method, apparatus, and system may be implemented in other manners. For example, the apparatus embodiments described above are merely exemplary. For example, division of the units is merely logical function division, and may be other division in actual implementation. For example, multiple units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on multiple network elements. A part or all of the units may be selected according to actual requirements to achieve the objectives of the solutions of the embodiments.

In addition, functional units in the embodiments of the disclosure may be integrated into one processing unit, or each of the units may be physically included separately, or two or more units may be integrated into one unit. The integrated unit may be implemented in a form of hardware, or may also be implemented in a form of hardware plus a software functional unit.

The integrated unit implemented in the form of a software functional unit may be stored in a computer-readable storage medium. The software functional unit is stored in a storage medium, and includes several instructions for instructing a computer device (which may be a personal computer, a server, and the like) to perform a part of the operations of the methods described in the embodiments of the disclosure.

Those of ordinary skill in the art may understand that all or a part of the processes of the methods in the embodiments may be implemented by a computer program instructing relevant hardware. The program may be stored in a computer-readable storage medium. When the program is run, the processes of the methods in the embodiments are performed. The storage medium may be a magnetic disk, an optical disk, a read-only memory (ROM), a random access memory (RAM), or the like.

Embodiments disclosed above are merely example embodiments of the disclosure, and certainly are not intended to limit the protection scope of the disclosure. Those of ordinary skill in the art may understand that all or some of processes that implement the foregoing embodiments and equivalent modifications made in accordance with the claims of the disclosure shall fall within the scope of the disclosure.

## Claims

1. A message transmission method, applied to a terminal device and comprising:
determining a transmission mode for Msg1, wherein the transmission mode for the Msg1 is repetition or non-repetition, and the Msg1 is used to request random access; and
sending the Msg1 to a network device, wherein the Msg1 comprises a preamble, and the preamble indicates the transmission mode for the Msg1.

2. The method of claim 1, wherein the preamble indicates the transmission mode for the Msg1 comprises:
the preamble is in a preamble set corresponding to the transmission mode for the Msg1.

3. The method of claim 2, further comprising:
receiving a first indication information sent from the network device, wherein the first indication information indicates a correspondence between the transmission mode for the Msg1 and the preamble set.

4. The method of claim 3, wherein the first indication information indicates the correspondence between the transmission mode for the Msg1 and the preamble set comprises:
the first indication information indicates a preamble set for Msg1 non-repetition and/or a preamble set for Msg1 repetition; or
the first indication information indicates a split point between the preamble set for Msg1 non-repetition and the preamble set for Msg1 repetition.

5. The method of claim 4, wherein the preamble set for Msg1 non-repetition and the preamble set for Msg1 repetition are orthogonal to each other.

6. The method of claim 4 or 5, wherein the preamble set for Msg1 repetition is in a preamble set for Msg3 repetition; and
the preamble set for Msg1 non-repetition comprises a first subset and a second subset, wherein the first subset is in the preamble set for Msg3 repetition, the second subset is in a preamble set for Msg3 non-repetition, and the Msg3 is used to request to establish a radio resource control (RRC) connection.

7. The method of claim 6, wherein the preamble set for Msg3 non-repetition and the preamble set for Msg3 repetition are orthogonal to each other.

8. The method of claim 6 or 7, further comprising:
receiving a second indication information from the network device, wherein the second indication information indicates the preamble set for Msg3 repetition.

9. The method of claim 8, wherein the second indication information indicates the preamble set for Msg3 repetition comprises:
the second indication information indicates a split point between the preamble set for Msg3 non-repetition and the preamble set for Msg3 repetition.

10. The method of claim 1, wherein sending the Msg1 to the network device comprises:
sending the Msg1 to the network device on a physical random access channel (PRACH) occasion (RO) resource, wherein the RO resource corresponds to a synchronization signal and PBCH block (SSB), and a signal measurement result of the SSB is greater than or equal to a threshold.

11. The method of claim 10, wherein a correspondence between RO resources and SSBs is a first correspondence in response to the transmission mode for the Msg1 being repetition; and
a correspondence between RO resources and SSBs is a second correspondence in response to the transmission mode for the Msg1 being non-repetition;
wherein the first correspondence is different from the second correspondence.

12. A message transmission method, applied to a network device and comprising:
receiving Msg1 sent by a terminal device, wherein the Msg1 comprises a preamble, the preamble indicates a transmission mode for the Msg1, and the transmission mode comprises repetition or non-repetition; and
determining a correspondence between synchronization signal and PBCH blocks (SSBs) and physical random access channel (PRACH) occasion (RO) resources, based on the transmission mode.

13. The method of claim 12, further comprising:
determining a first SSB based on the correspondence and a first RO resource in response to the Msg1 being received on the first RO resource, wherein the first SSB is a SSB corresponding to the first RO resource.

14. The method of claim 12 or 13, wherein the preamble indicates the transmission mode for the Msg1 comprises:
the preamble is in a preamble set corresponding to the transmission mode for the Msg1.

15. The method of claim 14, further comprising:
sending a first indication information to the terminal device, wherein the first indication information indicates a correspondence between the transmission mode for the Msg1 and the preamble set.

16. The method of claim 15, wherein the first indication information indicates the correspondence between the transmission mode for the Msg1 and the preamble set comprises:
the first indication information indicates a preamble set for Msg1 non-repetition and/or a preamble set for Msg1 repetition; or
the first indication information indicates a split point between the preamble set for Msg1 non-repetition and the preamble set for Msg1 repetition.

17. The method of claim 16, wherein the preamble set for Msg1 non-repetition and the preamble set for Msg1 repetition are orthogonal to each other.

18. The method of claim 16 or 17, wherein the preamble set for Msg1 repetition is in a preamble set for Msg3 repetition; and
the preamble set for Msg1 non-repetition comprises a first subset and a second subset, wherein the first subset is in the preamble set for Msg3 repetition, the second subset is in a preamble set for Msg3 non-repetition, and the Msg3 is used to request to establish a radio resource control (RRC) connection.

19. The method of claim 18, wherein the preamble set for Msg3 non-repetition and the preamble set for Msg3 repetition are orthogonal to each other.

20. The method of claim 18 or 19, further comprising:
sending a second indication information to the terminal device, wherein the second indication information indicates the preamble set for Msg3 repetition.

21. The method of claim 20, wherein the second indication information indicates the preamble set for Msg3 repetition comprises:
the second indication information indicates a split point between the preamble set for Msg3 non-repetition and the preamble set for Msg3 repetition.

22. A message transmission apparatus, applied to a terminal device and comprising:
a processing unit configured to, for the terminal device, determine a transmission mode for Msg1, wherein the transmission mode for the Msg1 is repetition or non-repetition, and the Msg1 is used to request random access; and
a communication unit configured to, for the terminal device, send the Msg1 to a network device, wherein the Msg1 comprises a preamble, and the preamble indicates the transmission mode for the Msg1.

23. A message transmission apparatus, applied to a network device and comprising:
a communication unit configured to receive Msg1 sent by a terminal device, wherein the Msg1 comprises a preamble, the preamble indicates a transmission mode for the Msg1, and the transmission mode comprises repetition or non-repetition; and
a processing unit configured to determine a correspondence between synchronization signal and PBCH blocks (SSBs) and physical random access channel (PRACH) occasion (RO) resources, based on the transmission mode.

24. A communication apparatus, wherein the communication apparatus comprises a processor and a memory, wherein the processor and the memory are connected to each other, the memory is configured to store a computer program, the computer program comprises a program instruction, and the processor is configured to invoke the program instruction to execute the method of any one of claims 1 to **11** or the method of any one of claims 12 to 21.

25. A chip, wherein the chip comprises a processor and an interface, and the processor is coupled to the interface, the interface is configured to receive or output a signal, and the processor is configured to execute a code instruction to cause the method of any one of claims 1 **to 11** to be executed, or to cause the method of any one of claims 12 to 21 to be executed.

26. A module device, wherein the module device comprises a communication module, a power supply module, a storage module, and a chip module, wherein
the power supply module is configured to provide electric energy for the module device;
the storage module is configured to store data and instructions;
the communication module is configured for internal communication of the module device, or configured for communication between the module device and an external device; and
the chip module is configured to execute the method of any one of claims 1 to **11, or** execute the method of any one of claims 12 to 21.

27. A computer-readable storage medium, wherein the computer-readable storage medium stores a computer program, the computer program comprises a program instruction, and when executed by a processor, the program instruction causes the processor to execute the method of any one of claims 1 to **11,** or execute the method of any one of claims 12 to 21.
